# EUROPEAN PATENT APPLICATION

(11) **EP 3 040 597 A1**
(43) Date of publication of application: **06.07.2016**
(21) Application number: 15198130.5
(22) Date of filing: 04.12.2015
(51) Int. Cl.: F16N 11/00, F16H 57/04, F01D 25/18, F04D 27/02, F02C 9/18

(54) **VARIABLE BLEED VALVE SYSTEMS INCLUDING A STOP MECHANISM WITH A SELF-LUBRICATING FOLLOWER NUT ASSEMBLY**

(30) Priority: 12.12.2014 US 201414569349
(71) Applicant: Honeywell International Inc., Morris Plains, NJ 07950 (US)
(72) Inventor: ROWE, Steven Brian, Morris Plains, NJ New Jersey 07950 (US); BIRCHAK, Dan, Morris Plains, NJ New Jersey 07950 (US); RYAN, Bill, Morris Plains, NJ New Jersey 07950 (US)
(74) Representative: Houghton, Mark Phillip

(57) **Abstract**

Variable bleed valve systems (10) thereof including a stop mechanism (100) with a self-lubricating follower nut assembly (110) are provided. Self-lubricating follower nut assembly (110) includes a follower nut (112) and a pair of grease reservoirs (120) . Follower nut (112) has a recess (122) at each of a first end (114) and a second end (116) and a groove (118) extending between the first and second ends. A grease reservoir (120) is disposed within each recess (122). Each grease reservoir (120) has an outlet opening (134) substantially aligned with a corresponding end of the groove (118). Each grease reservoir (120) is compressible to expel lubricating grease into the groove (118) upon compression. The self-lubricating follower nut assembly (110) is configured to translate along a hollow screw between opposed end stops disposed within a housing of the stop mechanism. Each grease reservoir is compressed each time the self-lubricating follower nut assembly impacts an end stop of the opposed end stops.

## Description

### TECHNICAL FIELD

The present invention generally relates to gas turbine engines, and more particularly relates to variable bleed valve systems thereof including a stop mechanism with a self-lubricating follower nut assembly.

### BACKGROUND

It is well known in the gas turbine engine field to provide variable bleed valves (VBVs). Typically, VBVs are configured as doors that open to provide a bleed flowpath to bleed off compressed air between the low pressure compressor (LPC) and a core engine compressor of a gas turbine engine at high engine power settings to prevent LPC stalls. A conventional variable bleed valve (VBV) system positions a plurality of variable bleed valves by hydraulic pressure acting upon a fuel gear motor. The hydraulic pressure is scheduled by a VBV scheduling unit of the main engine control (MEC) to provide the VBV position, as derived from a VBV feedback cable position. A VBV feedback cable is positioned to provide the scheduling unit with a current VBV position to compare with the desired position. A stop mechanism mounted on the fuel gear motor limits the number of revolutions of the fuel gear motor to the number of revolutions required for a complete cycle (opening-closing) of the variable bleed valves.

The stop mechanism includes a housing for a hollow screw which is driven by the fuel gear motor. A follower nut of the stop mechanism translates along the hollow screw and stops the rotation of the fuel gear motor when it reaches an end stop of a pair of end stops. The screw threads are lubricated by lubricating grease.

Lubricating the screw threads requires regular maintenance, including disassembly of the stop mechanism and re-greasing. Alternatively, the housing in which the follower nut translates along the hollow screw may be filled with the lubricating grease. However, this is problematic because in certain instances, the housing is not sealed and the lubricating grease may undesirably migrate out of the housing and onto surrounding parts. In addition, the grease may also thicken when exposed to cold temperatures. Dry (i.e., non-lubricated) screw threads generate significantly more friction than lubricated screw threads. When dry screw threads wear to a critical level, engine performance is degraded, and has the potential for causing engine surge followed by a stall. This condition may result in an engine shutdown and air turnback during flight.

Hence, there is a need for variable bleed valve systems including a stop mechanism with a self-lubricating follower nut assembly. The self-lubricating follower nut assembly substantially maintains variable bleed valve system performance, extends the life of the stop mechanism beyond the overhaul life of the engine, and has a longer life than the conventional follower nut of a stop mechanism in a variable bleed valve system, thereby reducing the incidence of inadvertent engine shutdowns during flight. The self-lubricating follower nut assembly also permits re-greasing of the screw threads without regular maintenance of the stop mechanism.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Self-lubricating follower nut assemblies are provided. In accordance with one exemplary embodiment, a self-lubricating follower nut assembly comprises a follower nut having a recess at each of a first end and a second end and a groove extending between the first and second ends. A grease reservoir is disposed within each recess. Each grease reservoir has an outlet opening substantially aligned with a corresponding end of the groove and compressible to expel lubricating grease into the groove upon compression.

Stop mechanisms for a variable bleed valve system are provided in accordance with yet another exemplary embodiment of the present invention. The stop mechanism comprises a housing, a hollow screw disposed within the housing and having a plurality of screw threads, a main flexible shaft extending through the hollow screw and configured to connect the stop mechanism to a master ballscrew actuator of the variable bleed valve system, and a self-lubricating follower nut assembly. The self-lubricating follower nut assembly is configured to translate along the hollow screw between opposed end stops disposed within the housing. The self-lubricating follower nut assembly is disposed between the opposed end stops and comprises a follower nut threadably mounted on the hollow screw and having a first end and a second end with a groove extending therebetween and a recess at each of the first and second ends. A grease reservoir is disposed in each recess and each grease reservoir has an outlet opening substantially aligned with a corresponding end of the groove and is configured to expel lubricating grease from the grease reservoir into the groove each time the self-lubricating follower nut assembly impacts an end stop of the opposed end stops.

Variable bleed valve systems are provided in accordance with yet another exemplary embodiment of the present invention. The variable bleed valve system comprises a variable bleed valve scheduling unit integral with a main engine control, a fuel gear motor, and a mechanical transmission system comprising a stop mechanism. The stop mechanism comprises a housing, a hollow screw disposed within the housing, a main flexible shaft extending through the hollow screw and connecting the fuel gear motor to a master ballscrew actuator of the variable bleed valve system, and a self-lubricating follower nut assembly disposed within the housing. The self-lubricating follower nut assembly comprises a follower nut and a pair of grease reservoirs. The follower nut is threadably mounted on the hollow screw and configured to translate along the hollow screw between first and second end stops in the housing when overdriven with respect to the plurality of screw threads on the hollow screw. The follower nut has a first end and a second end with an axial groove extending therebetween. The grease reservoir for storing lubricating grease is disposed at each of the first and second ends of the follower nut and has an outlet opening substantially aligned with a corresponding end of the axial groove to expel a portion of the lubricating grease into the axial groove when the self-lubricating follower nut assembly impacts one of the first and second end stops resulting in compression of the respective grease reservoir.

Furthermore, other desirable features and characteristics of the variable bleed valve system including the stop mechanism with a self-lubricating follower nut assembly will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a schematic view of a variable bleed valve system in accordance with exemplary embodiments of the present invention;
FIG. 2 is an isometric view of a stop mechanism of the variable bleed valve system of FIG. 1, in accordance with yet another exemplary embodiment of the present invention;
FIG. 3 is a cross-sectional view of the stop mechanism of FIG. 2, taken along the line 3-3 thereof;
FIG. 4 is an isometric view of a self-lubricating follower nut assembly of the stop mechanism of FIGS. 2 and 3, the self-lubricating follower nut assembly including a follower nut having a plurality of interrupted internal threads defining an axial groove and a pair of grease reservoirs, according to exemplary embodiments of the present invention;
FIG. 5 is a cross-sectional view of the self-lubricating follower nut assembly of FIG. 4;
FIG. 6 is an enlarged partial cross-sectional view of the self-lubricating follower nut assembly of FIGS. 4 and 5; and
FIG. 7 is a partial side view of the self-lubricating follower nut assembly of FIGS. 4 through 6, illustrating lubricating grease travel back and forth in the axial groove between the pair of grease reservoirs (a single grease reservoir is shown in FIG. 7) and distribution of the lubricating grease between rows of interrupted internal threads of the follower nut.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Various embodiments are directed to variable bleed valve (VBV) systems including a stop mechanism with a self-lubricating follower nut assembly. A VBV system is used in aircraft gas turbine engines (such as the CFM-56 gas turbine engine). The VBV system in the gas turbine engine performs four primary functions: The VBV system positions a plurality of bleed valves in response to a differential fuel pressure through a fuel gear motor, mechanically synchronizes the plurality of bleed valves throughout the stroke, limits the bleed valve position at the end of each stroke, and provides feedback of the bleed valve position. When the bleed valves are open, a portion of the primary airflow from the low pressure compressor (LPC) is permitted to go through a midbox fan frame and into a secondary (fan) airflow. The bleed valves open during low and transient operations to increase the LPC mass flow and to improve LPC and high pressure compressor (HPC) matching. At the higher speeds, more LPC air must be bled over into the fan discharge to maintain an optimum flow through the core engine to prevent engine surge and possible resultant stall. The bleed valves close progressively as the operating point approaches cruise. Efficient operation requires the bleed valves to be fully closed near a specified corrected core engine speed and higher.

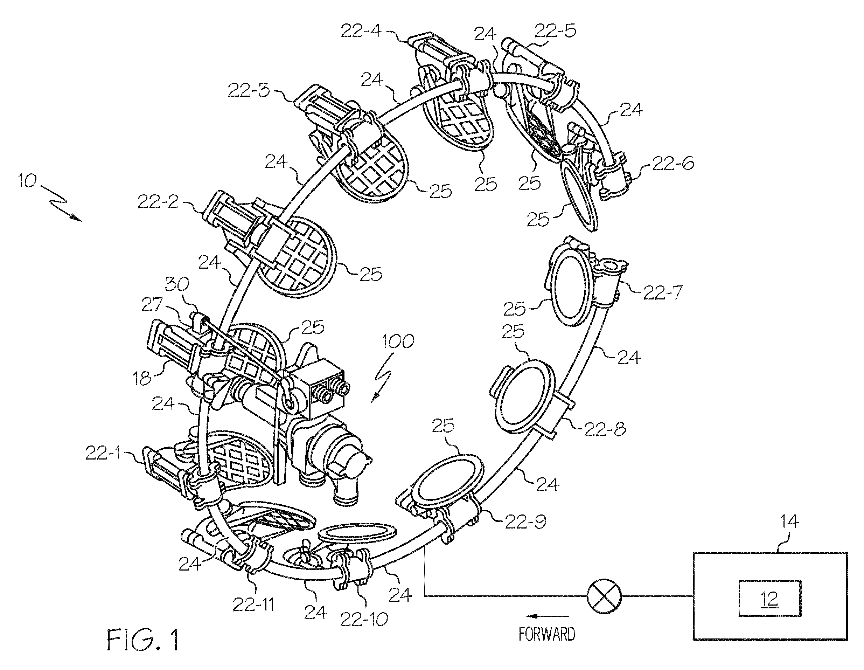

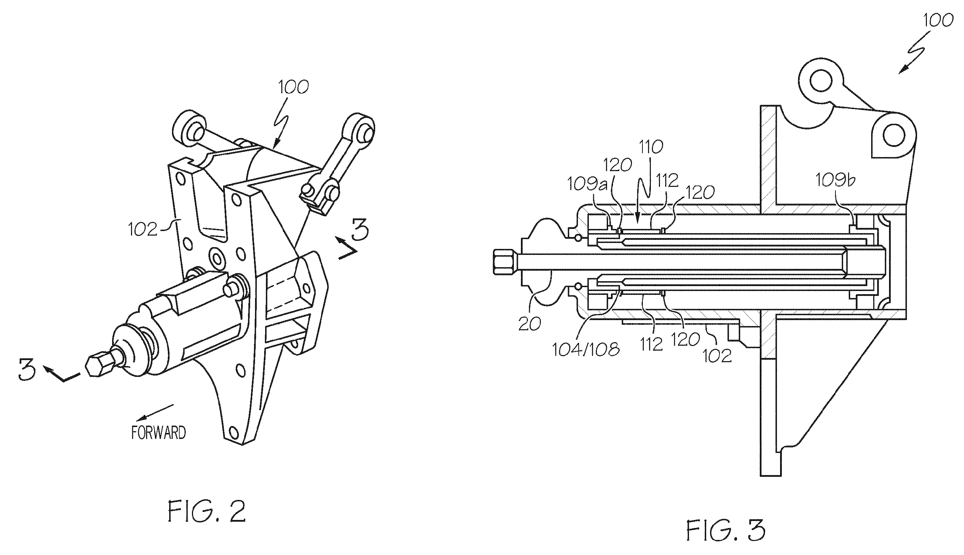

As noted previously, and as well known in the art and depicted in FIG. 1, a variable bleed valve system 10 generally comprises a VBV scheduling unit 12 integral with a main engine control (MEC) 14, a fuel gear motor 16, and a stop mechanism 100 (FIGS. 2 and 3). The main engine control (MEC) 14 schedules the variable bleed valve 25 position by directing high pressure fuel to the VBV fuel gear motor 16. The scheduling unit 12 identifies the position required of the variable bleed valves in percent of angle at a specified corrected core engine speed. The fuel gear motor 16 may comprise a positive displacement gear motor. The fuel gear motor 16 controls the position of the bleed valves. The fuel gear motor 16 is mounted to the aft end of the stop mechanism 100. The fuel gear motor 16 converts pressurized fuel into rotary shaft power which is driven through the stop mechanism 100 to a gear reduction stage of a bleed valve and master ballscrew actuator unit 18. Fuel, which could leak past the different sealing provisions, is drained overboard through a starter air discharge duct fitting (not shown). A main VBV flexible shaft 20 (see FIG. 3) connects the fuel gear motor 16 to the bleed valve and master ballscrew actuator unit 18. The bleed valve and master ballscrew actuator unit 18 is the unit through which the driving input from the stop mechanism 100 is transferred to a plurality of other bleed valves and ballscrew actuators 22-1 through 22-11. In general, the bleed valve and master ballscrew actuator unit 18 is comprised of a speed reduction gearbox and a ballscrew actuator linked to a hinged door 25 (the bleed valve). Speed reduction is successively carried out through spur gears and then bevel gears, the last of which drives the ballscrew actuator. The output motion of the bevel gears is transferred to the eleven other ballscrew actuators 22-1 through 22-11 through eleven flexible shafts 24. As noted previously, the function of the stop mechanism 100 is to limit the number of revolutions of the fuel gear motor 16 to the number of revolutions required for a complete cycle (opening-closing) of the VBV doors 25. While an exemplary variable bleed valve system has been depicted in FIG. 1, it is to be understood that the variable bleed valve system may have additional, fewer, or different components. In addition, while a total of eleven other bleed valves and ballscrew actuators 22-1 through 22-11 and eleven flexible shafts 24 are depicted, it is to be understood that a fewer or greater number may be used.

Still referring to FIG. 1 and now specifically to FIGS. 2 and 3, the stop mechanism 100 is installed inside a fan frame midbox structure (not shown) between the fuel gear motor 16 and the bleed valve and master ballscrew actuator unit 18. The stop mechanism 100 comprises a housing 102 for a hollow screw 104 that holds the main VBV flexible shaft 20 connecting the fuel gear motor 16 to the master ballscrew actuator 18. The hollow screw 104 has external screw threads (not shown) on a hollow screw shaft 108 that holds the main VBV flexible shaft 20. The hollow screw 104 is driven by the fuel gear motor 16. A VBV feedback reverser arm 28 is mounted on the housing 102 of the stop mechanism 100. The feedback reverser arm 28 links the feedback rod 30 from the master ballscrew actuator 18 to a feedback cable 32 that is routed to the MEC 14. Through this linkage, the MEC 14 constantly monitors the angular position of the VBV doors 25.

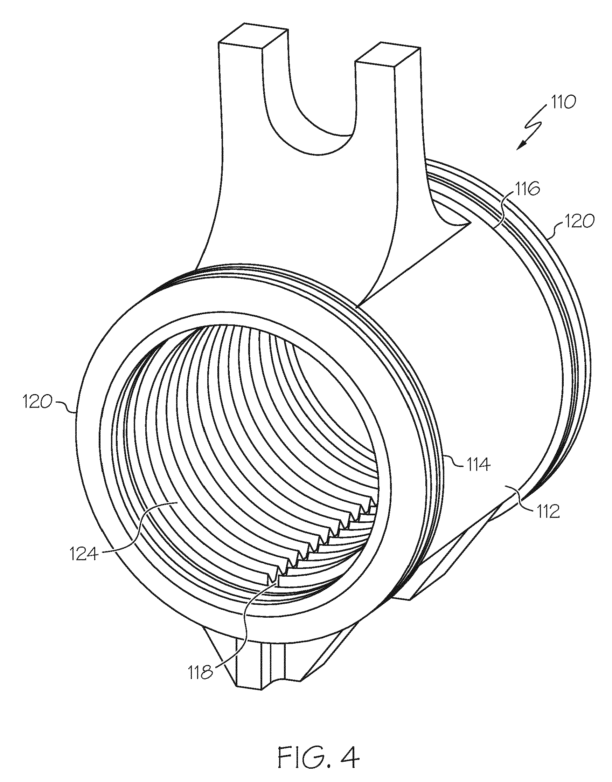

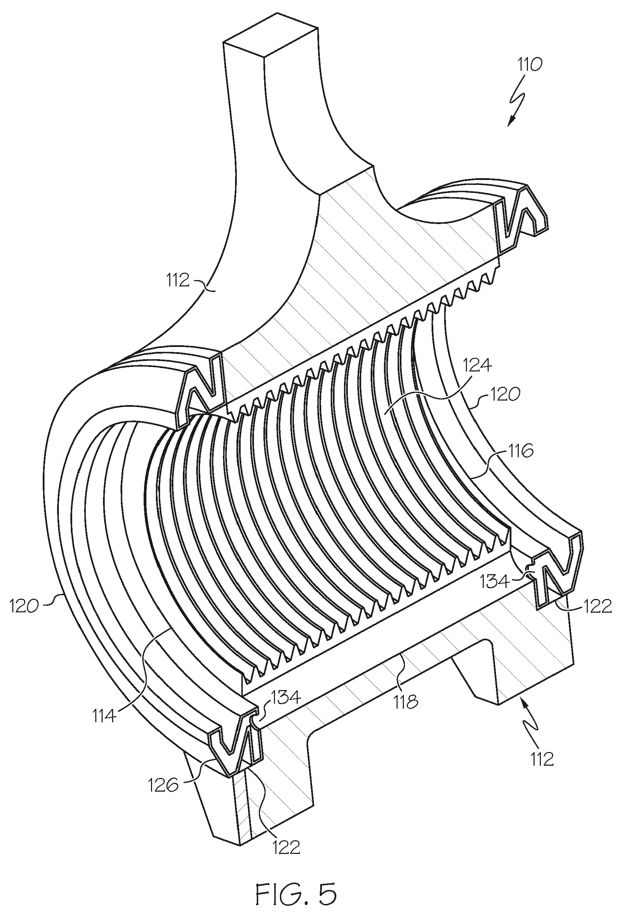

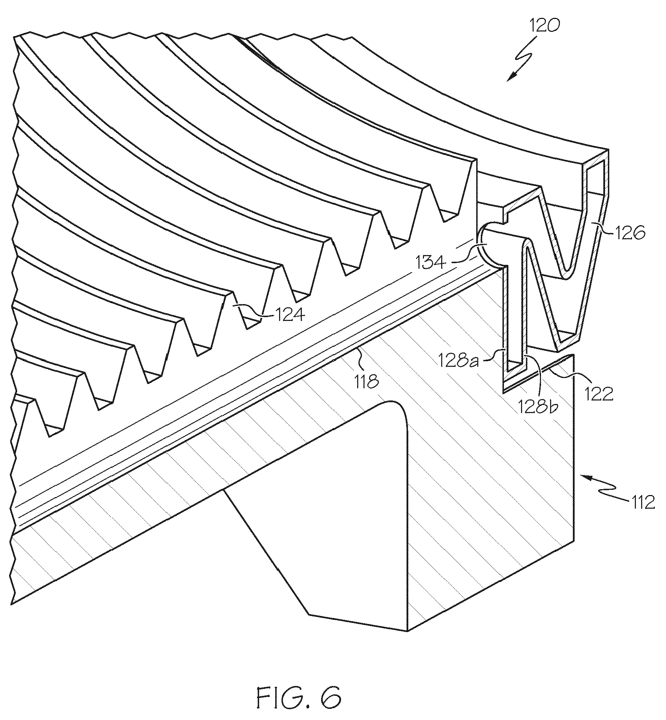

Still referring to FIGS. 2 and 3 and now to FIGS. 4 through 7, according to exemplary embodiments of the present invention, the stop mechanism 100 further comprises a self-lubricating follower nut assembly 110 (FIGS. 4 through 7). The self-lubricating follower nut assembly 110 of the stop mechanism 100 (FIGS. 1 through 3) comprises a follower nut 112 having a first end and second end 114 and 116 with an axial groove 118 extending therebetween and opposing grease reservoirs 120 each disposed in a recess 122 (FIGS. 5 through 7) at the first and second ends. The first and second ends may be generally circular in cross-section (FIG. 4). The follower nut 112 may include integral interrupted internal threads 124 with a gap between the thread segments that defines the axial groove 118. The integral interrupted internal threads 124 are configured to register with the exterior screw threads (not shown) of the hollow screw 104, for purposes as hereinafter described. As seen best in FIGS. 5 through 7, each of the first and second ends of the follower nut includes the recess 122 configured for receipt of the respective grease reservoir 120. The follower nut 112 may include by design or be modified to include the opposing recesses 122. The self-lubricating follower nut assembly 110 is disposed between opposed end stops 109a and 109b in the housing 102 of the stop mechanism 100 depicted in FIG. 3. A first end stop 109a limits movement of the self-lubricating follower nut assembly 110 in one direction and a second end stop 109b limits movement of the self-lubricating follower nut assembly 110 in an opposite direction, as hereinafter described.

A hollow interior 126 of each of the grease reservoirs 120 is configured to be substantially or fully packed with lubricating grease. Each of the grease reservoirs is formed from a flexible, compressible, and expandable material. Suitable exemplary materials for the grease reservoirs include n-butyl or various types of silicon. In the depicted embodiment of FIG. 4, the grease reservoir 120 comprises an annular member configured to be disposed in each recess 122 of the follower nut 112. The grease reservoirs 120 may have a generally Z-shaped cross section as depicted in FIGS. 5 through 7. The generally Z-shaped grease reservoir 120 comprises horizontal exterior and interior top walls 128a and 128b and generally horizontal exterior and interior bottom walls 130a and 130b connected by longitudinally extending diagonal walls 132a, 132b. When the grease reservoirs are disposed in the opposed recesses, the top walls 128a,128b and bottom walls 130a, 130b of the generally Z-shaped grease reservoirs are positioned in a horizontally opposed relation with the horizontal exterior top wall of the generally Z-shaped grease reservoir lying flush against the recess sidewall at the respective end of the follower nut (i.e., the exterior top wall of each generally Z-shaped grease reservoir is substantially flat and abuts the end of the follower nut). The exterior top wall 128a includes an outlet opening 134 that is substantially aligned with a corresponding end of the axial groove 118 in the follower nut 112 as depicted in FIGS. 5 through 7. The grease reservoirs 120 in their normally relaxed position tend to lie flush against the recess sidewall for purposes as hereinafter described. The grease reservoirs 120 are disposed outboard of and abutting the ends of the screw threads, for purposes as hereinafter described. The walls 128a, 128b, 130a, 130b, and 132a, and 132b define the hollow interior 126 of the grease reservoir where the lubricating grease is stored. The grease reservoir and the follower nut have substantially flat abutting surfaces at the ends of the screw threads (where they interface). The substantially flat abutting surface of the grease reservoir may have a protective cover (not shown) to protect against wear. While grease reservoirs 120 having a generally Z-shaped cross section are depicted, it is to be understood that the cross-section or shape of one or both of the grease reservoirs 120 may be varied (i.e., having other than a generally Z-shaped cross section). For example, the grease reservoirs may have a bellows-type shape (i.e., with concertinaed sides to allow it to expand and contract), helical-shaped bellows, or be generally round.

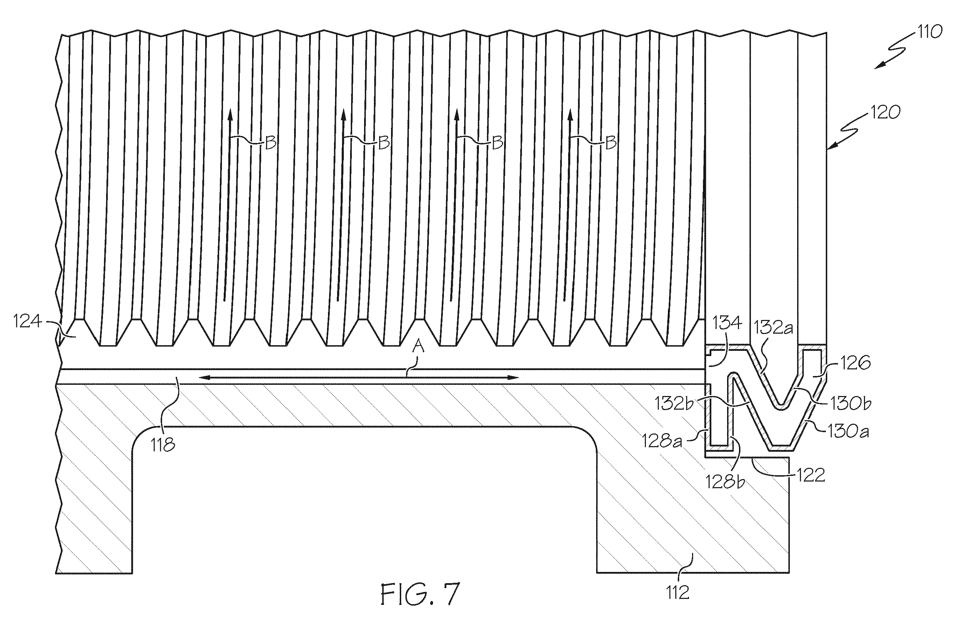

In use, the hollow screw 104 is driven by the fuel gear motor 16. More specifically, the fuel gear motor 16 turns the internal shaft 20 that is mated to the hollow screw 104 through splines. As the hollow screw rotates, an anti-rotation rod (not shown) prevents the self-lubricating follower nut assembly from rotating, causing the assembly to translate (move laterally). The hollow screw shaft 108 holds the main VBV flexible shaft 20 (FIG. 3) connecting the fuel gear motor 16 to the master ballscrew actuator 18 of the variable bleed valve system 10. The self-lubricating follower nut assembly 110 translates along the hollow screw 104 and stops the rotation of the fuel gear motor 16 when it reaches one of the end stops 109a or 109b. The hollow screw and attached end stops will rotate as the self-lubricating follower nut assembly 110 translates along the hollow screw. For translating, the interrupted threads of the follower nut register or align with the corresponding screw threads of the hollow screw. When the self-lubricating follower nut assembly 110 impacts the end stop 109a or 109b that is at the end of travel in one direction (more particularly, the reservoir that is outboard of the follower nut impacts the end stop), the follower nut 112 of the assembly continues to translate, compressing the grease reservoir 120 (that has impacted the end stop) that is at the end of travel in the one direction. Thus, the end stop is configured to be impacted by the self-lubricating follower nut assembly 110 and, upon impact, to (i) limit movement of the self-lubricating follower nut assembly (and thus stop rotation of the fuel gear motor); and (ii) results in compression of the reservoir and expulsion of lubricating grease into the groove. Thus, each grease reservoir is configured to be impacted by the end of travel surface on the end stop and, upon impact to compress and expel the lubricating grease into the groove. The self-lubricating follower nut assembly will return to the opposite end of the exterior screw threads (not shown) of the hollow screw when the direction of rotation of the fuel gear motor is reversed. Thus, the self-lubricating follower nut assembly 110 will travel back and forth, depending upon the direction of rotation of the fuel gear motor. Each time the grease reservoir 120 is compressed at the end of travel in one direction, a portion of the lubricating grease from the impacted and compressed reservoir 120 is expelled from the outlet opening 134 therein into the corresponding end of the axial groove 118 in the translating nut. The expelled lubricating grease is picked up by the passing screw threads 106 as the follower nut 112 translates along the screw threads and is deposited at the interface between the external screw threads 106 of the hollow screw and the interrupted internal threads 124 of the follower nut, providing a continuous supply of lubricating grease to the interface. The depth of the axial groove 118 is relatively shallow to permit the lubricating grease to be picked up by the passing screw threads 106. FIG. 7 depicts both the expelled lubricating grease traveling back and forth in the axial groove 118 between the grease reservoirs 120 (arrow A) and deposit thereof at the interface between the rows of interrupted threads 124 (arrows B). As the hollow screw 104 rotates, each revolution allows the lubricating grease to be picked up and distributed or dispersed along the entire length of the hollow screw, effectively periodically changing the lubricating grease and keeping the screw threads well lubricated. The used lubricating grease is pushed into the housing over time as the hollow screw rotates with fresh lubricating grease expelled from the grease reservoir replacing the used lubricating grease. Thus, the self-lubricating follower nut assembly 110 provides an active regreasing mechanism.

As a result of the continuous supply of the lubricating grease to the interface, the life and performance of the variable bleed valve system 10 including the stop mechanism 100 with the follower nut assembly 110 are substantially maintained, without requiring re-greasing by disassembly of the stop mechanism, etc. In addition, as each of the grease reservoirs is completely sealed except for the outlet opening, the fresh lubricating grease cannot leak therefrom and onto surrounding components.

From the foregoing, it is to be appreciated that variable bleed valve systems including a stop mechanism with a self-lubricating follower nut assembly are provided. The self-lubricating follower nut assembly and follower nut according to exemplary embodiments of the present invention permit lubrication (i.e., re-greasing) without requiring disassembly of the follower nut assembly and substantially maintain performance and life of variable bleed valve systems and stop mechanisms therein, thereby reducing the incidence of inadvertent inflight engine shutdowns due to engine stalls and seized variable bleed valve parts.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A self-lubricating follower nut assembly comprising:
a follower nut having a recess at each of a first end and a second end and a groove extending between the first and second ends; and
a grease reservoir disposed within each recess, each grease reservoir having an outlet opening substantially aligned with a corresponding end of the groove and compressible to expel lubricating grease into the groove upon compression.

2. The self-lubricating follower nut assembly of Claim 1, wherein an interface between each grease reservoir and the follower nut is defined by substantially flat abutting surfaces of the follower nut and each grease reservoir.

3. The self-lubricating follower nut assembly of Claim 1, wherein the follower nut includes interrupted threads defining the groove.

4. The self-lubricating follower nut assembly of Claim 1, wherein each grease reservoir is substantially Z-shaped and, when disposed within each recess, the generally Z-shaped grease reservoirs are positioned in a horizontally opposed relation.

5. The self-lubricating follower nut assembly of Claim 1, wherein the self-lubricating follower nut assembly is configured to be disposed within a housing of a stop mechanism of a variable bleed valve system, the housing including first and second end stops and the self-lubricating follower nut assembly is configured to be disposed between the first and second end stops with each grease reservoir disposed outboard of the follower nut.

6. The self-lubricating follower nut assembly of Claim 5, wherein the stop mechanism further comprises a hollow screw having a plurality of screw threads that align with the interrupted threads of the follower nut, the self-lubricating follower nut assembly configured to translate along the hollow screw between the first and second end stops and to impact a respective end stop at the end of travel in one direction.

7. The self-lubricating follower nut assembly of Claim 6, wherein the grease reservoir of the self-lubricating follower nut assembly is configured to be directly impacted by the respective end stop and, upon impact with the end stop, to (i) limit movement of the self-lubricating follower nut assembly; and (ii) compress and expel the lubricating grease into the groove.

8. The self-lubricating follower nut assembly of Claim 7, wherein lubricating grease is expelled each time one of the grease reservoirs is impacted.

9. The self-lubricating follower nut assembly of Claim 7, wherein the first end stop limits movement of the self-lubricating follower nut assembly in one direction and the second end stop limits movement of the self-lubricating follower nut assembly in an opposite direction.
